# EUROPEAN PATENT APPLICATION

(11) **EP 1 656 864 A2**
(43) Date of publication of application: **17.05.2006**
(21) Application number: 05110340.6
(22) Date of filing: 04.11.2005
(51) Int. Cl.: A47J 36/08, A47J 36/12, A47J 45/06

(54) **Clamping device for saucepan covers**

(30) Priority: 05.11.2004 IT FI20040073 U
(71) Applicant: Intermark S.r.l., 50126 Firenze (IT)
(72) Inventor: PETRONI, Paolo, 50126, FIRENZE (IT)
(74) Representative: Gervasi, Gemma

(57) **Abstract**

A description is given of a handle that allows the user to tip a saucepan, for example to drain out the cooking water, keeping the lid in its closed position on the saucepan.

## Description

### FIELD OF THE INVENTION

The present invention refers to saucepan handles.

### 1. PRIOR ART AND SUMMARY OF THE INVENTION

As is well known, when foods are cooked using water or other liquids which at the end of cooking must be removed, the problem arises of how to easily remove said liquids, without using a drainer, a sieve, a colander and the like.

The most practical solution to this simple problem is to equip the saucepan with a cover, having on its surface a number of openings, which may be shaped in various ways, to allow the liquid to drain out of the saucepan, while however preventing the cooked food from coming out at the same time.

An example of a saucepan and lid of the aforementioned variety is the saucepan for cooking long pasta described in the application for Industrial Utility Model n° FI2003U00097 on behalf of the same Applicant.

However, the aforementioned solution presents the problem of how to maintain the cover in its closed position while the cooking liquid is being drained.

There are a range of possible solutions for this purpose which, although they are efficient, present various problems due to the complication of their construction; it would therefore clearly be useful to have a handle that would allow the aforesaid problem to be solved in the simplest possible way.

### 2. OBJECT OF THE INVENTION

The present invention therefore regards handles that allow a saucepan cover to be held in position while draining the cooking liquid, without presenting particular problems of construction and/or assembly on the saucepan.

The advantages given by the handle according to this invention will be better understood by all persons skilled in the field from the following description and by the annexed drawings, in which:
- Fig. 1 shows a view from above of the device according to the invention;
- Fig. 2 schematically shows a side view of the device according to the invention (assembled on the saucepan);
- Fig. 3 schematically shows a cross section of the device according to the invention.

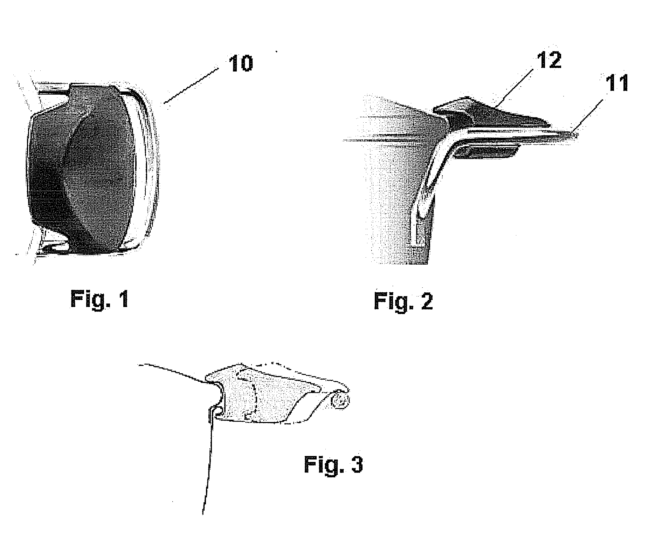

As can be seen in Fig. 1, the device 10 according to the invention includes a handle 11, consisting of a rod of rigid material essentially in a U shape, the arms of which (which may be bent downwards) are integrally joined to the external surface of the saucepan by their open end part.

In said U, a plate 12 is inserted, the edges of which, corresponding to the arms of the U, are shaped so as to engage with said arms and allow the backwards/forwards movement of said plate.

Handle 11 is arranged on the external surface of the saucepan near its upper rim, in such a way that the plate 12, when it is pushed towards the saucepan, can engage with the rim of said saucepan and with the lid, keeping it in position even when the saucepan is tipped at an angle.

According to a preferred version of the invention, the handle 11 has a circular section, while the edge of the plate 12 turned towards the saucepan shall be suitably shaped (essentially in a V shape), so as to facilitate the use of said plate with the rim of the saucepan and with the cover.

The use of the device according to the invention is clear.

At the time of use, the user grasps the handles and will push with the thumbs plate 12 against the lid, and will therefore be able to tip the saucepan to allow the liquid to flow out either through the lid (if said lid has the openings as described above) or, even more simply, positioning the plate 12 so that a small space is left open between saucepan and lid.

The rigid material used to make the handle 11 will preferably be in metal or a plastic material such as bakelite (preferably with low heat conductivity) while the plate 12 will preferably be made of heat-refractory material (wood, plastic, resin, bakelite, etc.)

## Claims

1. Clamping device for saucepan lids (10) comprised of a handle (11) consisting of a rod in rigid material and essentially in a U shape, which has arms, which may be bent downwards, that are integrally joined to the external part of the saucepan by their open end, and a plate (12) inserted into the U shaped body of said handle (11), the edges of such plate (12), corresponding to the arms of the U, are shaped so as to engage with said arms and allow the forwards/backwards movement of said plate (12).

2. Device according to claim 1 in which said rod forming the handle (11) has a circular section and the edge of the plate turned towards the saucepan is suitably shaped essentially in a V shape.

3. Device according to claims 1-2 in which the handle (11) is made of metal or plastic material and the plate (12) is of heat-refractory material.

4. Saucepan for cooking food equipped with a device according to claims 1-3.

5. Saucepan according to claim 4 in which said device is placed on the outside surface of the saucepan, near its upper rim, so that the plate (12) may engage with the rim of said saucepan and with the lid.

6. Saucepan according to claims 4 and 5 in which said saucepan is a saucepan for cooking long pasta, having essentially a truncated-conical form made up of a series of elliptical shaped sections joined together, in which the greatest axis of the section that makes up the base of the saucepan is long enough to allow the long pasta of standard dimensions to be laid out flatwise.

7. Saucepan according to claim 6 in which on the inner part of the saucepan there are levels, gradually decreasing in height, starting from the bottom of the saucepan, that indicate the ideal level of water necessary to cook a corresponding number of standard portions of pasta.
